# EUROPEAN PATENT SPECIFICATION

(11) **EP 2 477 424 B1**
(45) Date of publication and mention of the grant of the patent: **03.12.2014**
(21) Application number: 10814943.6
(22) Date of filing: 30.06.2010
(51) Int. Cl.: H04W 4/16, H04M 15/00, H04M 17/00, H04M 7/12

(54) **METHOD, APPARATUS AND SYSTEM FOR INTELLIGENTLY RECTIFYING DIALING OF PREPAID ROAMING SUBSCRIBER**
VERFAHREN, VORRICHTUNG UND SYSTEM ZUR INTELLIGENTEN BERICHTIGUNG VON WAHLVORGÄNGEN EINES PREPAID-ROAMING-TEILNEHMERS
PROCÉDÉ APPAREIL ET SYSTÈME PERMETTANT DE RECTIFIER INTELLIGEMMENT LA NUMÉROTATION D'UN ABONNÉ ITINÉRANT PRÉPAYÉ

(30) Priority: 10.09.2009 CN 200910161991
(43) Date of publication of application: 18.07.2012
(73) Proprietor: Huawei Technologies Co., Ltd., Shenzhen, Guangdong 518129 (CN)
(72) Inventor: TANG, Hong, Shenzhen Guangdong 518129 (CN); YANG, Debo, Shenzhen Guangdong 518129 (CN); ZHOU, Xuehai, Shenzhen Guangdong 518129 (CN); HUANG, Ji, Shenzhen Guangdong 518129 (CN)
(74) Representative: Isarpatent
(86) International application number: PCT/CN2010/074818
(87) International publication number: WO 2011/029341

(56) References cited:
- CN-A- 1 859 758
- CN-A- 1 929 685
- CN-A- 101 064 936
- KR-A- 20090 035 103
- US-A1- 2009 036 122

## Description

### FIELD OF THE INVENTION

The present invention relates to the field of mobile communications, and in particular, to a method, an apparatus, and a system for intelligently rectifying a dialed number of a prepaid roaming subscriber.

### BACKGROUD OF THE INVENTION

As economy and cultural communication between different countries becomes increasingly frequent, the number of international roaming terminal subscribers is rapidly increased. However, many subscribers often dial wrong numbers during international roaming due to different dialing habits. If the subscriber dials a number directly from a phone directory, the call cannot be connected without country code and number rectification.

Currently, for a postpaid international roaming subscriber, a general solution is that number rectification is triggered by a Mobile Switching Center (MSC) according to a dialed number and an International Mobile Subscription Identify (IMSI) of the subscriber. However, for a prepaid international roaming subscriber, an originating call of the subscriber cannot be triggered by the MSC according to a dialed number and an IMSI of the subscriber, but the MSC triggers a home Service Control Point (SCP) according to Originating CAMEL Subscription Information (O-CSI), wherein CAMEL is short for Customized Applications for Mobile Enhanced Logic US 2009/0036122 discloses such an approach. Therefore, intelligent number rectification for prepaid roaming subscriber is always a big problem.

In order to solve the problem that the prepaid international roaming subscriber dials a wrong number due to a different dialing habit, an existing solution includes sending a short message including a correct number to the subscriber, and dialing the correct number after the subscriber receives the short message. However, the solution cannot provide intelligent number rectification, and the subscriber needs to redial a number, so the user experience is not good enough.

Therefore, how to intelligently rectify the dialed number of the prepaid international roaming subscriber is a problem to be solved urgently.

### SUMMARY OF THE INVENTION

An embodiment of the present invention provides a method for intelligently rectifying a dialed number of a prepaid roaming subscriber, so as to intelligently rectify the dialed number of the prepaid roaming subscriber and automatically connect a call.

In order to solve the above technical problem, the embodiment of the present invention employs the following technical solution.

A method for intelligently rectifying a dialed number of a prepaid roaming subscriber includes:
monitoring Mobile Application Part (MAP) signaling related to a prepaid roaming subscriber and passing through an international gateway;
constructing a message used to modify O-CSI of the subscriber in a Visitor Location Register (VLR) of the prepaid roaming subscriber, and sending the message to the VLR;
determining whether a dialed number from a visited MSC of the subscriber is required to be rectified;
if the dialed number from the visited MSC of the subscriber is required to be rectified, rectifying the dialed number and sending the rectified dialed number to the international gateway through the visited MSC; and
receiving a message carrying the dialed number processed by the international gateway from the international gateway, and forwarding the message to a home SCP, which processes prepaid service, of the subscriber according to the MAP signaling.

An embodiment of the present invention also provides an International Service Gateway (ISG), so as to intelligently rectify a dialed number of a prepaid roaming subscriber.

In order to solve the above technical problem, the embodiment of the present invention employs the following technical solution.

An ISG includes:
a monitoring and constructing unit, configured to monitor MAP signaling related to a prepaid roaming subscriber and passing through an international gateway, and construct a message used to modify O-CSI of the subscriber in a VLR of the prepaid roaming subscriber and send the message to the VLR through a receiving and sending unit;
a processing unit, configured to determine whether a dialed number from a visited MSC of the subscriber is required to be rectified, and if the dialed number from the visited MSC of the subscriber is required to be rectified, rectify the dialed number and deliver CONNECT signaling to the visited MSC through the receiving and sending unit; and
the receiving and sending unit, configured to receive the dialed number from the visited MSC of the subscriber and forward the dialed number to the processing unit, and forward a message carrying the dialed number processed by the international gateway from the international gateway to a home SCP, which processes prepaid service, of the subscriber according to the MAP signaling.

An embodiment of the present invention further provides a system for intelligently rectifying a dialed number of a prepaid roaming subscriber, so as to intelligently rectify the dialed number of the prepaid roaming subscriber and automatically connect a call.

In order to solve the above technical problem, the embodiment of the present invention employs the following technical solution.

A system for intelligently rectifying a dialed number of a prepaid roaming subscriber includes:
an ISG, configured to monitor MAP signaling related to a prepaid roaming subscriber and passing through an international gateway; construct a message used to modify O-CSI of the subscriber in a VLR of the prepaid roaming subscriber and send the message to the VLR; determine whether a dialed number from a visited MSC of the subscriber is required to be rectified; if the dialed number is required to be rectified, rectify the dialed number and deliver CONNECT signaling to the visited MSC; and forward a message carrying a processed dialed number from the international gateway to a home SCP, which processes prepaid service, of the subscriber according to the MAP signaling;
the visited MSC, configured to send the dialed number of the subscriber to the ISG and forward the dialed number rectified by the ISG to the international gateway; and
the international gateway, configured to process the rectified dialed number sent from the visited MSC and send the processed dialed number to the home SCP, which processes prepaid service, of the subscriber through the ISG.

Through the method, the apparatus, and the system, the ISG can monitor the MAP signaling passing through the international gateway, construct the message used to modify the O-CSI of the subscriber in the VLR of the prepaid roaming subscriber and send the message to the VLR, so that an originating call of the subscriber can be triggered to the ISG to rectify a number required to be rectified, forward the rectified number to the international gateway for processing, and forward the number processed by the international gateway to the home SCP, which processes prepaid service, of the subscriber. In this way, the dialed number of the prepaid roaming subscriber can be intelligently rectified and the call can be automatically connected, no matter the home SCP, which processes prepaid service, delivers the CONNECT signaling or the CONTINUE signaling.

### BRIEF DESCRIPTION OF THE DRAWINGS

Apparently, the accompanying drawings in the following description are only some embodiments of the present invention, and persons of ordinary skill in the art can derive other drawings from the accompanying drawings without creative efforts.
FIG. 1 is a flow chart of a method for intelligently rectifying a dialed number of a prepaid roaming subscriber according to an embodiment of the present invention;
FIG. 2 is a flow chart of a method for intelligently rectifying a dialed number of a prepaid roaming subscriber according to another embodiment of the present invention;
FIG. 3 is a schematic structure diagram of an ISG according to an embodiment of the present invention;
FIG. 4 is a schematic structure diagram of an ISG according to another embodiment of the present invention; and
FIG. 5 is a schematic structure diagram of a system for intelligently rectifying a dialed number of a prepaid roaming subscriber according to an embodiment of the present invention.

### DETAILED DESCRIPTION OF THE EMBODIMENTS

Embodiments of the present invention provides a method, an apparatus and a system for intelligently rectifying a dialed number of a prepaid roaming subscriber, so as to intelligently rectify the dialed number of the prepaid roaming subscriber and automatically connect a call.

The present invention is described in detail below with reference to the accompanying drawings. The embodiments described below are only a part rather than all of the embodiments of the present invention. All other embodiments obtained by persons of ordinary skill in the art based on the embodiments of the present invention without creative efforts shall fall within the protection scope of the present invention.

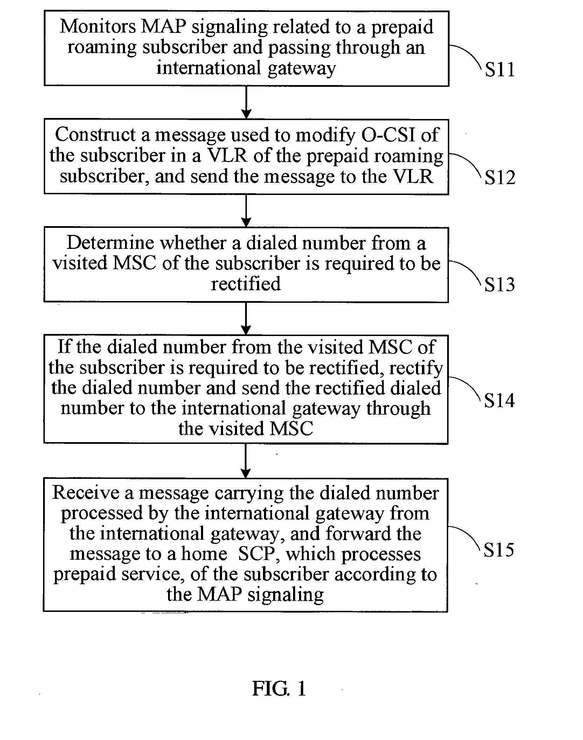

As shown in FIG. 1, a method for intelligently rectifying a dialed number of a prepaid roaming subscriber according to an embodiment of the present invention includes:
S11: An International Service Gateway (ISG) monitors MAP signaling related to a prepaid roaming subscriber and passing through an international gateway.
S12: The ISG constructs a message used to modify O-CSI of the subscriber in a Visitor Location Register (VLR) of the prepaid roaming subscriber, and sends the message to the VLR.
S13: The ISG determines whether a dialed number from a visited MSC of the subscriber is required to be rectified.
S14: If the dialed number from the visited MSC of the subscriber is required to be rectified, the ISG rectifies the dialed number and sends the rectified dialed number to the international gateway through the visited MSC.
S15: The ISG receives a message carrying the dialed number processed by the international gateway from the international gateway, and forwards the message to a home SCP, which processes prepaid service, of the subscriber according to the MAP signaling.

Through the method, the ISG can monitor the MAP signaling passing through the international gateway, construct the message used to modify the O-CSI of the subscriber in the VLR of the prepaid roaming subscriber and send the message to the VLR, so that an originating call of the subscriber can be triggered to the ISG to rectify a number required to be rectified, forward the rectified number to the international gateway for processing, and forward the number processed by the international gateway to the home SCP, which processes prepaid service, of the subscriber. In this way, the dialed number of the prepaid roaming subscriber can be intelligently rectified and a call can be automatically connected, no matter the home SCP, which processes prepaid service, delivers CONNECT signaling or CONTINUE signaling.

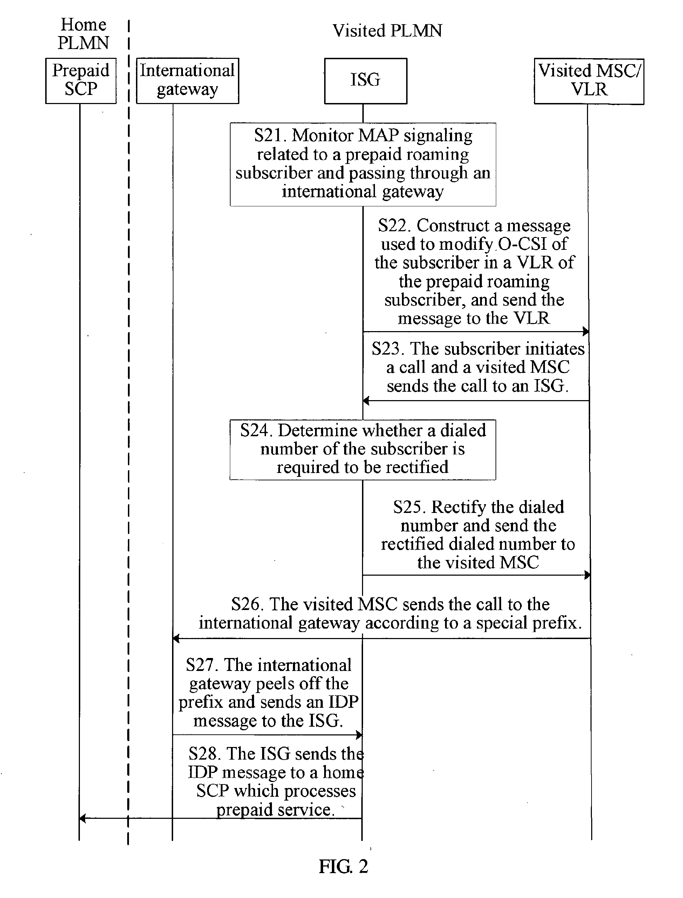

As shown in FIG. 2, another method for intelligently rectifying a dialed number of a prepaid roaming subscriber according to an embodiment of the present invention includes:
S21: An ISG monitors MAP signaling related to a prepaid roaming subscriber and passing through an international gateway.

Generally, the subscriber selects an MSC/VLR in a roaming network for registration when roaming, then the MSC/VLR sends an MAP_UPDATE_LOCATION message to a Home Location Register (HLR) of a home country of the subscriber, then the HLR sends an MAP_INSERT_SUBSCRIBER_DATA message to the MSC/VLR, the MSC/VLR returns an MAP_INSERT_SUBSCRIBER_DATA_ACK message, and finally, the HLR returns an MAP_UPDATE_LOCATION_ACK message to the MSC/VLR. In the process, the ISG is deployed beside a Gateway Mobile Switching Center/International Signaling Transfer Point (GMSC/ISTP) of an operator to monitor the MAP signaling (for example, the MAP_UPDATE_LOCATION message, the MAP_UPDATE_LOCATION_ACK message, the MAP_INSERT_SUBSCRIBER_DATA message, and the MAP_INSERT_SUBSCRIBER_DAT_ACK message) related to the prepaid roaming subscriber and passing through the GMSC/ISTP, extract and analyze the MAP signaling, and save an IMSI, a Mobile Station International ISDN Number (MSISDN), wherein ISDN is short for Integrated Services Digital Network, a VLR number, and O-CSI of the prepaid roaming subscriber.

S22: The ISG constructs a message used to modify the O-CSI of the subscriber in a VLR of the prepaid roaming subscriber, and sends the message to the VLR.

For example, the ISG constructs a new MAP_ISD message and sends the new MAP_ISD message to the VLR, so that the VLR modifies the stored O-CSI of the prepaid roaming subscriber (for example, modifies the O-CSI to a Global Title (GT) address of the ISG), thereby ensuring that an originating call of the subscriber is triggered to the ISG to intelligently rectify a dialed number.

S23: The subscriber initiates a call and a visited MSC sends the call to the ISG.

S24: The ISG determines whether a dialed number of the subscriber is required to be rectified.

If the dialed number of the subscriber is normal, the ISG delivers CONTINUE signaling, and the call is normally connected; and if the dialed number is required to be rectified, the procedure proceeds to step S25.

S25: The ISG rectifies the dialed number and sends the rectified dialed number to the visited MSC.

For example, it is assumed that the dialed number of the prepaid roaming subscriber is B, and if the ISG determines that the dialed number B is required to be rectified, the ISG rectifies the dialed number B to be B'. Meanwhile, in order that the international gateway can be triggered again, the ISG adds a special prefix to B', which is represented by Prefix+B', in which the prefix is a routing and triggering prefix. Then, the ISG delivers CONNECT signaling to the visited MSC of the subscriber, in which the CONNECT signaling carries the Prefix+B'. In this way, the visited MSC can send the call to the international gateway according to the special prefix.

S26: The visited MSC sends the call to the international gateway according to the special prefix.

S27: The international gateway peels off the prefix and sends an IDP message to the ISG. At this time, the dialed number in the IDP message is B'.

S28: The ISG forwards the IDP message to a home SCP, which processes prepaid service, of the subscriber according to an original O-CSI message saved in the process of monitoring the MAP signaling.

Then, the home SCP, which processes prepaid service, of the subscriber can charge according to a normal process. The dialed number of the subscriber is B' on the international gateway, so the call can be normally connected to the rectified number B', no matter the home SCP, which processes prepaid service, of the subscriber delivers CONNECT signaling or CONTINUE signaling.

Through the method, the ISG can monitor the MAP signaling passing through the international gateway, construct the message used to modify the O-CSI of the subscriber in the VLR of the prepaid roaming subscriber and send the message to the VLR, so that an originating call of the subscriber can be triggered to the ISG to rectify a number required to be rectified, forward the rectified number to the international gateway for processing, and forward the number processed by the international gateway to the home SCP, which processes prepaid service, of the subscriber. In this way, the dialed number of the prepaid roaming subscriber can be intelligently rectified and the call can be automatically connected, no matter the home SCP, which processes prepaid service, delivers the CONNECT signaling or the CONTINUE signaling.

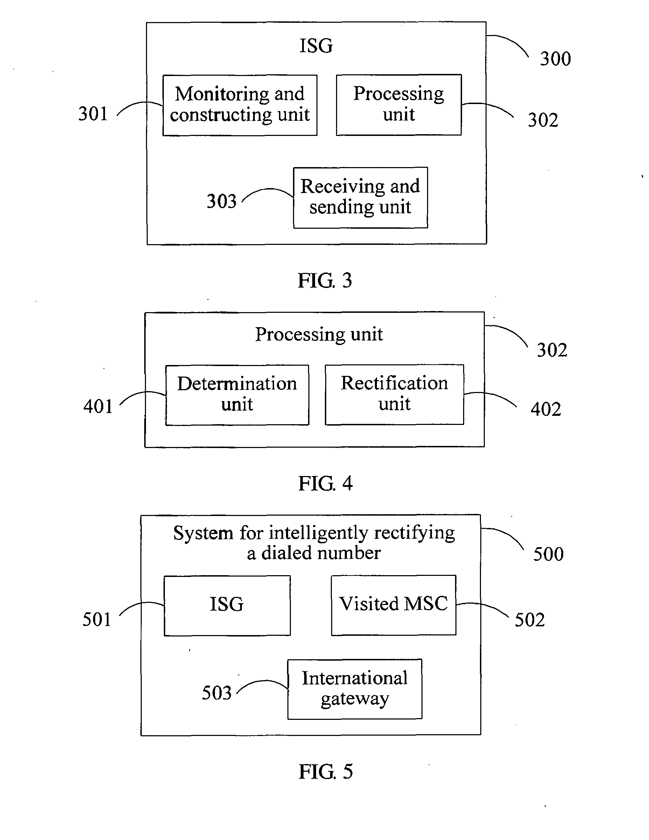

As shown in FIG. 3, an ISG 300 according to an embodiment of the present invention includes a monitoring and constructing unit 301, a processing unit 302, and a receiving and sending unit 303.

The monitoring and constructing unit 301 is configured to monitor MAP signaling related to a prepaid roaming subscriber and passing through an international gateway, and construct a message used to modify O-CSI of the subscriber in a VLR of the prepaid roaming subscriber and send the message to the VLR through the receiving and sending unit 303.

The monitoring the MAP signaling related to the prepaid roaming subscriber and passing through the international gateway includes: monitoring, by the monitoring and constructing unit 301, the MAP signaling passing through the international gateway, such as, an MAP_UPDATE_LOCATION message, an MAP_UPDATE_LOCATION_ACK message, an MAP_INSERT_SUBSCRIBER_DATA message, and an MAP_INSERT_SUBSCRIBER_DAT_ACK message, extracting and analyzing the MAP signaling, and saving an IMSI, an MSISDN, a VLR number, and O-CSI of the prepaid roaming subscriber. Moreover, the message used to modify the O-CSI of the subscriber in the VLR of the prepaid roaming subscriber may be an MAP_ISD message.

The processing unit 302 is configured to determine whether a dialed number (represented by B) from a visited MSC of the subscriber is required to be rectified; if the dialed number from the visited MSC of the subscriber is not required to be rectified, deliver CONTINUE signaling to the visited MSC to make a call continue; and if the dialed number from the visited MSC of the subscriber is required to be rectified, rectify the dialed number and deliver CONNECT signaling to the visited MSC through the receiving and sending unit 303.

The rectifying the dialed number includes: rectifying the dialed number B to be B', and adding a special prefix to B', so that the international gateway can be triggered again. The prefix is a routing and triggering prefix.

The receiving and sending unit 303 is configured to receive the dialed number from the visited MSC of the subscriber, forward the dialed number to the processing unit 302, and forward a message carrying the dialed number processed by the international gateway from the international gateway to a home SCP, which processes prepaid service, of the subscriber according to the MAP signaling (for example, based on an original O-CSI message of the subscriber saved in the process of monitoring the MAP signaling).

Through the ISG, the ISG can monitor the MAP signaling passing through the international gateway, construct the message used to modify the O-CSI of the subscriber in the VLR of the prepaid roaming subscriber and send the message to the VLR, so that an originating call of the subscriber can be triggered to the ISG to rectify a number required to be rectified, forward the rectified number to the international gateway for processing, and forward the number processed by the international gateway to the home SCP, which processes prepaid service, of the subscriber. In this way, the dialed number of the prepaid roaming subscriber can be intelligently rectified and a call can be automatically connected, no matter the home SCP, which processes prepaid service, delivers the CONNECT signaling or CONTINUE signaling.

Furthermore, as shown in FIG. 4, the processing unit 302 includes a determination unit 401 and a rectification unit 402.

The determination unit 401 is configured to determine whether the dialed number from the visited MSC is required to be rectified and send a determination result to the rectification unit.

The rectification unit 402 is configured to rectify the dialed number and deliver the CONNECT signaling to the visited MSC through the receiving and sending unit 302 if the dialed number is required to be rectified, and deliver the CONTINUE signaling to the visited MSC through the receiving and sending unit 302 to make the call continue if the dialed number is not required to be rectified.

As shown in FIG. 5, a system 500 for intelligently rectifying a dialed number of a prepaid roaming subscriber according to an embodiment of the present invention includes an ISG 501, a visited MSC 502, and an international gateway 503.

The ISG 501 is configured to monitor MAP signaling related to a prepaid roaming subscriber and passing through the international gateway; construct a message used to modify O-CSI of the subscriber in a VLR of the prepaid roaming subscriber and send the message to the VLR; determine whether a dialed number from the visited MSC 502 of the subscriber is required to be rectified; if the dialed number is not required to be rectified, deliver CONTINUE signaling to the visited MSC to make a call continue; if the dialed number is required to be rectified, rectify the dialed number and deliver CONNECT signaling to the visited MSC 502; and forward a message carrying a processed dialed number from the international gateway to a home SCP, which processes prepaid service, of the subscriber according to the MAP signaling.

The visited MSC 502 is configured to send the dialed number of the subscriber to the ISG 501 and forward the dialed number rectified by the ISG 501 to the international gateway 503.

The international gateway 503 is configured to process the rectified dialed number sent from the visited MSC 502 and send the processed dialed number to the home SCP, which processes prepaid service, of the subscriber through the ISG 501.

Through the system, the ISG 501 can monitor the MAP signaling passing through the international gateway, construct the message used to modify the O-CSI of the subscriber in the VLR of the prepaid roaming subscriber and send the message to the VLR, so that an originating call of the subscriber can be trigger to the ISG 501 to rectify a number required to be rectified and forward the rectified number to the international gateway 503 through the visited MSC 502 for processing, and forward the number processed by the international gateway 503 to the home SCP, which processes prepaid service, of the subscriber. In this way, the dialed number of the prepaid roaming subscriber can be intelligently rectified and the call can be automatically connected, no matter the home SCP, which processes prepaid service, delivers the CONNECT signaling or the CONTINUE signaling.

Furthermore, the ISG 501 may be an ISG shown in FIG. 3 or 4.

Moreover, for the manner through which the system 500 intelligently rectifying the dialed number of the prepaid roaming subscriber rectifies the dialed number of the subscriber, reference may be made to the processes shown in FIGs.1 and 2, and the details will not be described herein again.

Persons of ordinary skill in the art should understand that all or a part of the processes of the methods according to the embodiments may be implemented by a computer program instructing relevant hardware. The program may be stored in a computer readable storage medium. When the program is run, the processes of the methods according to the embodiments are performed. The storage medium may be, for example, a magnetic disk, an optical disk, a read-only memory (ROM), or a random access memory (RAM).

The protection scope of the present invention is defined by the appended claims.

## Claims

1. A method for intelligently rectifying a dialed number of a prepaid roaming subscriber, comprising:
monitoring Mobile Application Part ,MAP, signaling related to a prepaid roaming subscriber and passing through an international gateway;
constructing a message used to modify Originating CAMEL Subscription Information ,O-CSI, of the subscriber in a Visitor Location Register ,VLR, of the prepaid roaming subscriber, and sending the message to the VLR;
determining whether a dialed number from a visited Mobile Switching Center ,MSC, of the subscriber is required to be rectified;
if the dialed number from the visited MSC of the subscriber is required to be rectified, rectifying the dialed number and sending the rectified dialed number to the international gateway through the visited MSC; and
receiving a message carrying the dialed number processed by the international gateway from the international gateway, and forwarding the message to a home - Service Control Point ,SCP , which processes prepaid service, of the subscriber according to the MAP signaling.

2. The method according to claim 1, wherein the monitoring the MAP signaling related to the prepaid roaming subscriber and passing through the international gateway comprises:
monitoring an MAP_UPDATE_LOCATION message and an MAP_INSERT_SUBSCRIBER_DATA message related to the prepaid roaming subscriber and passing through the international gateway; and
extracting and saving information in the MAP_UPDATE_LOCATION message and the MAP_INSERT_SUBSCRIBER_DATA message.

3. The method according to claim 2, wherein the information in the MAP_UPDATE_LOCATION message and the MAP_INSERT_SUBSCRIBER_DATA message comprises an International Mobile Subscription Identify ,IMSI, of the subscriber, a Mobile Station International ISDN Number ,MSISDN,, a VLR number, and the O-CSI of the subscriber.

4. The method according to claim 3, wherein the rectifying the dialed number and sending the rectified dialed number to the international gateway through the visited MSC comprises:
rectifying the dialed number and adding a prefix to the rectified dialed number;
delivering CONNECT signaling to the visited MSC; and
sending, by the visited MSC, the rectified dialed number carrying the prefix to the international gateway.

5. The method according to claim 4, wherein the receiving the message carrying the dialed number processed by the international gateway from the international gateway:
receiving a message carrying the dialed number processed by peeling off the prefix from the international gateway.

6. The method according to any one of claims 1 to 5, wherein if the dialed number from the visited MSC of the subscriber is not required to be rectified, CONTINUE signaling is delivered to the visited MSC to make a call continue.

7. An International Service Gateway ,ISG, comprising:
a monitoring and constructing unit, configured to monitor Mobile Application Part ,MAP, signaling related to a prepaid roaming subscriber and passing through an international gateway, and construct a message used to modify Originating CAMEL Subscription Information ,O-CSI, of the subscriber in a Visitor Location Register ,VLR, of the prepaid roaming subscriber and send the message to the VLR through a receiving and sending unit;
a processing unit, configured to determine whether a dialed number from a visited Mobile Switching Center ,MSC, of the subscriber is required to be rectified, and if the dialed number from the visited MSC of the subscriber is required to be rectified, rectify the dialed number and deliver CONNECT signaling to the visited MSC through the receiving and sending unit; and
the receiving and sending unit, configured to receive the dialed number from the visited MSC of the subscriber and forward the dialed number to the processing unit, and forward a message carrying the dialed number processed by the international gateway to a home Service Control Point ,SCP , which processes prepaid service, of the subscriber according to the MAP signaling.

8. The ISG according to claim 7, wherein the MAP signaling comprises an MAP_UPDATE_LOCATION message and an MAP_INSERT_SUBSCRIBER_DATA message.

9. The ISG according to claim 7, wherein the processing unit comprises:
a determination unit, configured to determine whether the dialed number from the visited MSC is required to be rectified and send a determination result to a rectification unit; and
the rectification unit, configured to rectify the dialed number and deliver the CONNECT signaling to the visited MSC through the receiving and sending unit if the dialed number is required to be rectified.

10. The ISG according to claim 7, 8, or 9, wherein if the dialed number from the visited MSC of the subscriber is not required to be rectified, the processing unit delivers CONTINUE signaling to the visited MSC to make a call continue.

11. A system for intelligently rectifying a dialed number of a prepaid roaming subscriber, comprising:
an International Service Gateway ,ISG, configured to monitor MAP signaling related to a prepaid roaming subscriber and passing through an international gateway; construct a message used to modify Originating CAMEL Subscription Information ,O-CSI, of the subscriber in a Visitor Location Register ,VLR, of the prepaid roaming subscriber and send the message to the VLR; determine whether a dialed number from a visited Mobile Switching Center ,MSC, of the subscriber is required to be rectified; if the dialed number is required to be rectified, rectify the dialed number and deliver CONNECT signaling to the visited MSC; and forward a message carrying the processed dialed number from the international gateway to a home Service Control Point ,SCP , which processes prepaid service, of the subscriber according to the MAP signaling;
the visited MSC, configured to send the dialed number of the subscriber to the ISG and forward the dialed number rectified by the ISG to the international gateway; and
the international gateway, configured to process the rectified dialed number sent from the visited MSC and send the processed dialed number to the home SCP, which processes prepaid service, of the subscriber through the ISG.

12. The system according to claim 11, wherein if the dialed number from the visited MSC of the subscriber is not required to be rectified, the ISG delivers CONTINUE signaling to the visited MSC to make a call continue.

13. The system according to claim 11 or 12, wherein the ISG is an ISG according to any one of claim 7 to claim 10.

## Patentansprüche

1. Verfahren zum intelligenten Berichtigen einer gewählten Nummer eines Roaming-Teilnehmers mit Vorauszahlung, das Folgendes umfasst:
Überwachen der Signalisierung des Mobilen Anwendungsteils (Mobile Application Part signaling, MAP-Signalisierung), die sich auf einen Roaming-Teilnehmer mit Vorauszahlung und Durchgang durch ein internationales Gateway bezieht;
Konstruieren einer Nachricht, die verwendet wird, abgehende CAMEL-Abonnementsinformationen (Originating CAMEL Subscription Information, O-CSI) des Teilnehmers in einer Besucherdatei (Visitor Location Register, VLR) des Roaming-Teilnehmers mit Vorauszahlung zu modifizieren, und Senden der Nachricht zu der VLR;
Bestimmen, ob es erforderlich ist, eine gewählte Nummer von einer Aufenthalts-Mobilfunkvermittlungsstelle (visited Mobile Switching Center, Aufenthalts-MSC) des Teilnehmers zu berichtigen;
falls es erforderlich ist, dass die gewählte Nummer von der Aufenthalts-MSC des Teilnehmers berichtigt wird, Berichtigen der gewählten Nummer und Senden der berichtigten gewählten Nummer zu dem internationalen Gateway über die Aufenthalts-MSC; und
Empfangen einer Nachricht, die die gewählte Nummer, die durch das internationale Gateway verarbeitet ist, von dem internationalen Gateway führt, und Weiterleiten der Nachricht zu einem Heimat-Dienststeuerungspunkt (home Service Control Point, Heimat-SCP), der den Vorauszahlungsdienst verarbeitet, des Teilnehmers gemäß der MAP-Signalisierung.

2. Verfahren nach Anspruch 1, wobei das Überwachen der MAP-Signalisierung, die sich auf den Roaming-Teilnehmer mit Vorauszahlung und den Durchgang durch das internationale Gateway bezieht, Folgendes umfasst:
Überwachen einer MAP_UPDATE_LOCATION-Nachricht und einer MAP_INSERT_SUBSCRIBER_DATA-Nachricht, die sich auf den Roaming-Teilnehmer mit Vorauszahlung und Durchgang durch das internationale Gateway beziehen; und
Extrahieren und Speichern von Informationen in der MAP_UPDATE_LOCATION-Nachricht und der MAP_INSERT_SUBSCRIBER_DATA-Nachricht.

3. Verfahren nach Anspruch 2, wobei die Informationen in der MAP_UPDATE_LOCATION-Nachricht und der MAP_INSERT_SUBSCRIBER_DATA-Nachricht eine internationale Mobilabonnementskennung, IMSI, des Teilnehmers, eine internationale Mobilstations-ISDN-Nummer, MSISDN, eine VLR-Nummer und die O-CSI des Teilnehmers umfassen.

4. Verfahren nach Anspruch 3, wobei das Berichtigen der gewählten Nummer und Senden der berichtigten gewählten Nummer zu dem internationalen Gateway über die Aufenthalts-MSC Folgendes umfasst:
Berichtigen der gewählten Nummer und Hinzufügen eines Präfixes zu der berichtigten gewählten Nummer;
Zustellen von CONNECT-Signalisierung zu der Aufenthalts-MSC; und
Senden der berichtigten gewählten Nummer, die das Präfix führt, durch die Aufenthalts-MSC zu dem internationalen Gateway.

5. Verfahren nach Anspruch 4, wobei das Empfangen der Nachricht, die die durch das internationale Gateway verarbeitete gewählte Nummer führt, von dem internationalen Gateway Folgendes umfasst:
Empfangen einer Nachricht, die die durch Ablösen des Präfixes verarbeitete gewählte Nummer führt, von dem internationalen Gateway.

6. Verfahren nach einem der Ansprüche 1 bis 5, wobei dann, wenn es nicht erforderlich ist, dass die gewählte Nummer von der Aufenthalts-MSC des Teilnehmers berichtigt wird, CONTINUE-Signalisierung zu der Aufenthalts-MSC zugestellt wird, um eine Fortsetzung der Verbindung zu bewirken.

7. Internationales Dienst-Gateway (International Service Gateway, ISG), das Folgendes umfasst:
eine Überwachungs- und Konstruktionseinheit, die konfiguriert ist, Signalisierung des Mobilen Anwendungsteils, MAP-Signalisierung, die sich auf einen Roaming-Teilnehmer mit Vorauszahlung und Durchgang durch ein internationales Gateway bezieht, zu überwachen und eine Nachricht zu konstruieren, die verwendet wird, um abgehende CAMEL-Abonnementsinformationen, O-CSI, des Teilnehmers in einer Besucherdatei, VLR, des Roaming-Teilnehmers mit Vorauszahlung zu modifizieren, und die Nachricht zu der VLR über eine Empfangs- und Sendeeinheit zu senden;
eine Verarbeitungseinheit, die konfiguriert ist zu bestimmen, ob es erforderlich ist, eine gewählte Nummer von einer Aufenthalts-Mobilfunkvermittlungsstelle, Aufenthalts-MSC,
des Teilnehmers zu berichtigen, und falls es erforderlich ist, die gewählte Nummer von der Aufenthalts-MSC des Teilnehmers zu berichtigen, die gewählte Nummer zu berichtigen und CONNECT-Signalisierung zu der Aufenthalts-MSC über die Empfangs- und Sendeeinheit zuzustellen; und
die Empfangs- und Sendeeinheit, die konfiguriert ist, die gewählte Nummer von der Aufenthalts-MSC des Teilnehmers zu empfangen und die gewählte Nummer zu der Verarbeitungseinheit weiterzuleiten und eine Nachricht, die die durch das internationale Gateway verarbeitete gewählte Nummer führt, zu einem Heimat-Dienststeuerpunkt, Heimat-SCP, der den Vorauszahlungsdienst verarbeitet, des Teilnehmers gemäß der MAP-Signalisierung weiterzuleiten.

8. ISG nach Anspruch 7, wobei die MAP-Signalisierung eine MAP_UPDATE_LOCATION-Nachricht und eine MAP_INSERT_SUBSCRIBER_DATA-Nachricht umfasst.

9. ISG nach Anspruch 7, wobei die Verarbeitungseinheit Folgendes umfasst:
eine Bestimmungseinheit, die konfiguriert ist zu bestimmen, ob es erforderlich ist, die gewählte Nummer von der Aufenthalts-MSC zu berichtigen, und ein Bestimmungsergebnis zu einer Berichtigungseinheit zu senden; und
die Berichtigungseinheit, die konfiguriert ist, die gewählte Nummer zu berichtigen und die CONNECT-Signalisierung zu der Aufenthalts-MSC über die Empfangs- und Sendeeinheit zuzustellen, falls es erforderlich ist, die gewählte Nummer zu berichtigen.

10. ISG nach Anspruch 7, 8 oder 9, wobei dann, wenn es nicht erforderlich ist, die gewählte Nummer von der Aufenthalts-MSC des Teilnehmers zu berichtigen, die Verarbeitungseinheit CONTINUE-Signalisierung zu der Aufenthalts-MSC zustellt, um eine Fortsetzung der Verbindung zu bewirken.

11. System zum intelligenten Berichtigen einer gewählten Nummer eines Roaming-Teilnehmers mit Vorauszahlung, das Folgendes umfasst:
ein internationales Dienst-Gateway, ISG, das konfiguriert ist, MAP-Signalisierung, die sich auf einen Roaming-Teilnehmer mit Vorauszahlung und Durchgang durch ein internationales Gateway bezieht, zu überwachen; eine Nachricht zu konstruieren, die verwendet wird, um abgehende CAMEL-Abonnementsinformationen, O-CSI, des Teilnehmers in einer Besucherdatei, VLR, des Roaming-Teilnehmers mit Vorauszahlung zu modifizieren, und die Nachricht zu der VLR zu senden; zu bestimmen, ob es erforderlich ist, eine gewählte Nummer von einer Aufenthalts-Mobilfunkvermittlungsstelle, Aufenthalts-MSC, des Teilnehmers zu berichtigen; falls es erforderlich ist, die gewählte Nummer zu berichtigen, die gewählte Nummer zu berichtigen und CONNECT-Signalisierung zu der Aufenthalts-MSC zuzustellen; und eine Nachricht, die die verarbeitete gewählte Nummer führt, von dem internationalen Gateway zu einem Heimat-Dienststeuerpunkt, Heimat-SCP, der den Vorauszahlungsdienst verarbeitet, des Teilnehmers gemäß der MAP-Signalisierung weiterzuleiten;
die Aufenthalts-MSC, die konfiguriert ist, die gewählte Nummer des Teilnehmers zu dem ISG zu senden und die durch das ISG berichtigte gewählte Nummer zu dem internationalen Gateway weiterzuleiten; und
das internationale Gateway, das konfiguriert ist, die von der Aufenthalts-MSC gesendete berichtigte gewählte Nummer zu verarbeiten und die verarbeitete gewählte Nummer zu dem Heimat-SCP, der den Vorauszahlungsdienst verarbeitet, des Teilnehmers über das ISG zu senden.

12. System nach Anspruch 11, wobei dann, wenn es nicht erforderlich ist, die gewählte Nummer von der Aufenthalts-MSC des Teilnehmers zu berichtigen, das ISG CONTINUE-Signalisierung zu der Aufenthalts-MSC zustellt, um eine Fortsetzung der Verbindung zu bewirken.

13. System nach Anspruch 11 oder 12, wobei das ISG ein ISG nach einem der Ansprüche 7 bis 10 ist.

## Revendications

1. Procédé permettant de rectifier intelligemment un numéro composé par un abonné itinérant prépayé, comprenant les étapes suivantes :
contrôler la signalisation MAP, partie d'application mobile, relative à un abonné itinérant prépayé et passant par une passerelle internationale ;
construire un message utilisé pour modifier les informations d'abonnement CAMEL d'origine, O-CSI, de l'abonné contenues dans un registre de localisation des visiteurs, VLR, de l'abonné itinérant prépayé, et envoyer le message au VLR ;
déterminer si un numéro composé à partir d'un centre de commutation mobile, MSC, visité de l'abonné doit être rectifié ;
si le numéro composé à partir du MSC visité de l'abonné doit être rectifié, rectifier le numéro composé et transmettre le numéro composé rectifié à la passerelle internationale par l'intermédiaire du MSC visité ; et
recevoir un message contenant le numéro composé traité par la passerelle internationale à partir de la passerelle internationale, et transmettre le message à un point de commande de service, SCP, local qui traite le service prépayé de l'abonné selon la signalisation MAP.

2. Procédé selon la revendication 1, dans lequel l'étape consistant à contrôler la signalisation MAP relative à l'abonné itinérant prépayé et passant par la passerelle internationale comprend :
contrôler un message MAP_UPDATE_LOCATION et un message MAP_INSERT_SUBSCRIBER_DATA concernant l'abonné itinérant prépayé et passant par la passerelle internationale ; et
extraire et sauvegarder les informations contenues dans le message MAP_UPDATE_LOCATION et dans le message MAP_INSERT_SUBSCRIBER_DATA.

3. Procédé selon la revendication 2, dans lequel les informations présentes dans le message MAP_UPDATE_LOCATION et dans le message MAP_INSERT_SUBSCRIBER_DATA comprennent une identification internationale d'abonnement mobile, IMSI, de l'abonné, un numéro ISDN international de station mobile, MSISDN, un numéro VLR, et l'O-CSI de l'abonné.

4. Procédé selon la revendication 3, dans lequel l'étape consistant à rectifier le numéro composé et à envoyer le numéro composé rectifié à la passerelle internationale par l'intermédiaire du MSC visité comprend :
rectifier le numéro composé et ajouter un préfixe au numéro composé rectifié ;
délivrer la signalisation CONNECT au MSC visité ; et
envoyer, par le MSC visité, le numéro composé rectifié contenant le préfixe à la passerelle internationale.

5. Procédé selon la revendication 4, dans lequel l'étape consistant à recevoir le message contenant le numéro composé traité par la passerelle internationale à partir de la passerelle internationale comprend :
recevoir un message renfermant le numéro composé traité en supprimant le préfixe à partir de la passerelle internationale.

6. Procédé selon l'une quelconque des revendications 1 à 5, dans lequel si le numéro composé à partir du MSC visité de l'abonné ne doit pas être rectifié, la signalisation CONTINUE est délivrée au MSC visité pour continuer un appel.

7. Passerelle de service internationale, ISG, comprenant :
une unité de contrôle et de construction, configurée pour contrôler la signalisation MAP, partie d'application mobile, relative à un abonné itinérant prépayé et passant par une passerelle internationale, et construire un message utilisé pour modifier les informations d'abonnement CAMEL d'origine, O-CSI, de l'abonné contenues dans un registre de localisation des visiteurs, VLR, de l'abonné itinérant prépayé et envoyer le message au VLR par l'intermédiaire d'une unité de réception et d'envoi ;
une unité de traitement, configurée pour déterminer si un numéro composé à partir d'un centre de commutation mobile, MSC, visité de l'abonné doit être rectifié, et si le numéro composé à partir du MSC visité de l'abonné doit être rectifié, rectifier le numéro composé et délivrer la signalisation CONNECT au MSC visité par l'intermédiaire de l'unité de réception et d'envoi ; et
l'unité de réception et d'envoi, configurée pour recevoir le numéro composé à partir du MSC visité de l'abonné et transmettre le numéro composé à l'unité de traitement, et transmettre un message contenant le numéro composé traité par la passerelle internationale à un point de commande de service, SCP, local qui traite le service prépayé de l'abonné selon la signalisation MAP.

8. ISG selon la revendication 7, dans laquelle la signalisation MAP comprend un message MAP_UPDATE_LOCATION et un message MAP_INSERT_SUBSCRIBER_DATA.

9. ISG selon la revendication 7, dans laquelle l'unité de traitement comprend :
une unité de détermination, configurée pour déterminer si le numéro composé à partir du MSC visité doit être rectifié et envoyer un résultat de détermination à une unité de rectification ; et
l'unité de rectification, configurée pour rectifier le numéro composé et délivrer la signalisation CONNECT au MSC visité par l'intermédiaire de l'unité de réception et d'envoi si le numéro composé doit être rectifié.

10. ISG selon la revendication 7, 8, ou 9, dans laquelle si le numéro composé à partir du MSC visité de l'abonné ne doit pas être rectifié, l'unité de traitement délivre la signalisation CONTINUE au MSC visité pour continuer un appel.

11. Système permettant de rectifier intelligemment un numéro composé par un abonné itinérant prépayé, comprenant :
une passerelle de service internationale, ISG, configurée pour contrôler la signalisation MAP relative à un abonné itinérant prépayé et passant par une passerelle internationale ;
construire un message utilisé pour modifier les informations d'abonnement CAMEL d'origine, O-CSI, de l'abonné contenues dans un registre de localisation des visiteurs, VLR, de l'abonné itinérant prépayé et envoyer le message au VLR ; déterminer si un numéro composé à partir d'un centre de commutation mobile, MSC, visité de l'abonné doit être rectifié ; si le numéro composé doit être rectifié, rectifier le numéro composé et délivrer la signalisation CONNECT au MSC visité ; et transmettre un message contenant le numéro composé traité à partir de la passerelle internationale à un point de commande de service, SCP, local qui traite le service prépayé de l'abonné selon la signalisation MAP ;
le MSC visité, configuré pour envoyer le numéro composé de l'abonné à l'ISG et transmettre le numéro composé rectifié par l'ISG à la passerelle internationale ; et
la passerelle internationale, configurée pour traiter le numéro composé rectifié envoyé à partir du MSC visité et envoyer le numéro composé traité au SCP local, qui traite le service prépayé de l'abonné par l'intermédiaire de l'ISG.

12. Système selon la revendication 11, dans lequel si le numéro composé à partir du MSC visité de l'abonné ne doit pas être rectifié, l'ISG délivre la signalisation CONTINUE au MSC visité pour continuer un appel.

13. Système selon la revendication 11 ou 12, dans lequel l'ISG est une ISG selon l'une quelconque des revendications 7 à 10.
